# EUROPÄISCHE PATENTSCHRIFT

(11) **EP 1 843 061 B1**
(45) Veröffentlichungstag und Bekanntmachung des Hinweises auf die Patenterteilung: **22.10.2008**
(21) Anmeldenummer: 07006513.1
(22) Anmeldetag: 29.03.2007
(51) Int. Cl.: F16G 13/00

(54) **Kette für einen Kettentrieb**
Chain for a chain drive
Chaîne pour un entraînement de chaîne

(30) Priorität: 05.04.2006 DE 102006017121
(43) Veröffentlichungstag der Anmeldung: 10.10.2007
(73) Patentinhaber: IAV GmbH Ingenieurgesellschaft Auto und Verkehr, 10587 Berlin (DE)
(72) Erfinder: Lorenz, Ingolf, 09120 Chemnitz (DE); Parsche, Uwe, 09126 Chemnitz (DE)
(74) Vertreter: Bürger, Peter

(56) Entgegenhaltungen:
- EP-A- 1 566 568
- EP-A- 1 801 453
- EP-A1- 0 833 078
- WO-A-03/093700
- WO-A-03/095867
- DE-A1- 10 022 844
- DE-A1- 10 343 263
- DE-A1- 19 721 944
- DE-A1- 19 961 046
- DE-B- 1 030 122
- US-A- 4 615 171

## Beschreibung

Die Erfindung betrifft eine Kette für einen Kettentrieb.

Kraftübertragungsketten, insbesondere für Kettentriebe von Brennkraftmaschinen von Kraftfahrzeugen, erzeugen aufgrund ihrer Teilung in einzelne Elemente, wie Rollen, Laschen und Verbindungselemente, Rasselgeräusche. Kettengeräusche entstehen auch aufgrund des Polygoneffekts beim Aufschlagen der Kette an das Kettenrad oder an deren Spann- und Gleitschiene.

Zur Verringerung der Kettengeräusche eines Kettentriebes ist aus der DE 103 27 461 A1 bekannt, das Kettenrad mit einem elastischen Material zu versehen, so dass Kettenschwingungen beim Ein- und Auslaufen der Kette weitgehend gedämpft werden. Dabei ist der Zahnkranz unterhalb des Zahngrundes mit beidseitig in axialen Richtungen erstreckenden Verlängerungen versehen, an dessen radialen Außenseiten eine elastische Materialbeschichtung als Auflagefläche für die Kettenglieder der Kette vorgesehen ist. Die in axialen Richtungen erstreckenden Verlängerungen stellen die Auflageschulter eines Zahnrades dar, auf der die Kettenlaschen aufliegen.

Nachteilig bei dieser Lösung ist der hohe fertigungstechnische Aufwand für die Herstellung des mit einem elastischen Material beschichteten Kettenrades. Das elastische Material stellt ein Verschleißteil dar und muss somit nach einer bestimmten Laufzeit ausgewechselt werden. Das bedeutet, dass das gesamte Kettenrad als Verschleißteil ersetzt werden muss. Somit muss nicht nur die Kette als Verschleißteil, sondern auch das Kettenrad ausgewechselt werden. Dadurch werden die Kosten beträchtlich erhöht.

Zur Verminderung der Kettengeräusche ist es gemäß der US 4 615 171 A und der DE 103 43 263 A1 bekannt, die Längsseiten der mit einer Nabe bzw. Auflageschulter eines Kettenrades in Kontakt stehenden Kettenlasche mit einer schwingungsdämpfenden Materialschicht zu versehen. Dabei kann die Längsseite der schwingungsdämpfenden Materialschicht an die Außenkontur eines im Kettentrieb befindlichen Kettenrades angepasst sein.

Aus der DE 199 51 949 A1 ist eine Kettenlasche für eine Laschenkette vorbekannt, die als Umschlingungsmittel für ein stufenlos verstellbares Kegelscheibenumschlingungsgetriebe eingesetzt wird. Dabei weist ein Ende der Kettenlasche eine nasenförmige Verlängerung auf, die eine Überdeckung mit einer benachbarten Kettenlasche herstellt. Diese Verlängerungen haben die Aufgabe, ein Verkanten von benachbarten Kettenlaschen und damit eine Beschädigung der Kette zu vermeiden.

Aus der WO 03/093700 A1 ist ein Kettentrieb bekannt, bei dem zur Reduzierung des Schlages beim Auflaufen der Kette auf das Kettenrad die Stirnseiten der Kettenlaschen im unteren Bereich der Kettenkrümmung mit einem nasenförmigen Ansatz versehen sind. Dabei sind die nasenförmigen Ansätze so ausgebildet, dass sich die Ansätze zweier benachbarter Kettenlaschen beim Abrollen der Kette auf dem kleinsten Kettenrad nicht berühren. Nachteilig bei dieser Lösung ist, dass der Einlaufstoß eines noch nicht mit dem Kettenrad in Eingriff stehenden Kettengliedes noch nicht vorher gedämpft wird. Außerdem kann ein Durchschwingen der Kette beim Auslaufen der Kette vom Kettenrad nicht vermindert werden.

Der Erfindung liegt die Aufgabe zugrunde, eine Kette für einen Kettentrieb zu schaffen, die sich durch geringe Kettengeräusche auszeichnet, mit der der Polygoneffekt und ein Durchschwingen der Kette beim Einlauf der Kette reduziert wird und mit der die Kosten für einen Kettentrieb insgesamt gegenüber dem Stand der Technik verringert werden.

Erfindungsgemäß wird die Aufgabe durch die Merkmale des Patentanspruches 1 gelöst.

Durch die Anordnung von nasenförmigen und mit einer schwingungsdämpfenden Materialschicht versehenen Kontaktflächen an den Stirnseiten der Kettenlaschen, bei denen sich die Kontaktflächen der beiden hintereinander liegenden Kettenlaschen kurz vor dem Einlaufen des Kettengliedes auf das kleinste im Kettentrieb befindliche Kettenrad berühren, wird erreicht, dass der Einlaufstoß des nachfolgenden Kettengliedes nicht nur auf das Kettenrad, sondern auch auf das Kettenglied, das sich schon im Eingriff mit dem Kettenrad befindet, wirkt. Dadurch wird der Einlaufstoß reduziert. Beim Auslauf der Kette vom Kettenrad wird durch die Anordnung der nasenförmigen Kontaktflächen ein Durchschwingen der Kette gezielt reduziert. Zusätzlich kann der Kontaktbereich der Kettenlasche aus einem anderen z. B. stärker dämpfenden Material, wie Metallschaum, gefertigt werden, um den Kontaktimpuls mit dem übernächsten benachbarten Kettenglied zu mindern.

Weitere vorteilhafte Ausgestaltungen sind in dem Unteranspruch beschrieben, sie werden in der Beschreibung zusammen mit ihren Wirkungen erläutert.

Die Erfindung wird nachfolgend an Ausführungsbeispielen näher beschrieben. In der dazugehörigen Zeichnung ist schematisch eine Kettenlasche eines Kettentriebes dargestellt.

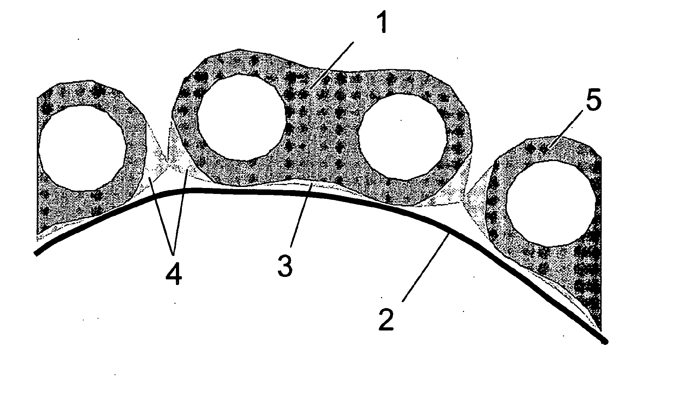

Die Kette für einen Kettentrieb besteht aus einer Vielzahl von durch Kettenbolzen miteinander verbundenen Kettenlaschen 1 sowie den dazugehörigen Rollen und Hülsen. Der Kettentrieb besteht aus wenigstens zwei Kettenrädern 2, die über die umlaufende Kette miteinander verbunden sind. In der Zeichnung ist von dem stilisierten Kettenrad 2 nur die Auflageschulter dargestellt, die beidseitig unterhalb des Zahngrundes des Kettenrades 2 angeordnet sind. Diese beidseitig des Kettenrades 2 angeordneten Auflageschultern bilden die Auflagefläche für die Kettenlaschen 1 der Kette.

Zur Reduzierung der Geräuschentwicklung der Kette sind erfindungsgemäß nasenförmige Kontaktflächen 4 an den Stirnseiten der Kettenlaschen 1 angeordnet, die mit einer schwingungsdämpfenden Materialschicht versehen sind. Dabei sind die nasenförmigen Kontaktflächen 4 im unteren Bereich der Kettenkrümmung angeordnet. Dieser Bereich ist bei einem Kettenrad 2 an den Stirnseiten der Kettenlasche 1 nahe der Auflageschultern des Kettenrades 2. Bei der Anordnung von beispielsweise Spann- oder Führungsschienen sind die nasenförmigen Kontaktflächen 4 sowohl im oberen als auch im unteren Bereich der Stirnseite der Kettenlasche 1 angeordnet.

Dabei bestehen die nasenförmigen Kontaktflächen 4 bzw. deren Beschichtung aus einem schwingungsdämpfenden Material, wie beispielsweise Metallschaum, Elastomeren, Gummi oder dergleichen.

Die nasenförmigen Kontaktflächen 4 der Kettenlasche 1 sind derart ausgebildet, dass sich die Kontaktflächen 4 der Kettenlasche 1 mit den Kontaktflächen 4 der jeweilig vorherigen und nachfolgenden Kettenlasche 5 beim Einlauf der Kette auf das kleinste Kettenrad 2 oder an die kleinste Krümmung einer Spann- oder Führungsschiene berühren. Beim Einlaufen der Kette auf das Kettenrad 2 wird durch die Berührung der nasenförmigen Kontaktfläche 4 der Kettenlasche 1 mit der nasenförmigen Kontaktfläche 4 der nachfolgenden Kettenlasche 5 die Kettenlasche 5 vor dem Auftreffen auf die Auflageschultern des Kettenrades 2 ausgelenkt, so dass die Kettenlasche 5 bzw. das Kettenglied besser auf die Auflageschultern des Kettenrades 2 auftreffen kann. Gleichzeitig wird dadurch der beim Einlaufen der Kette auf das Kettenrad 2 entstehende Einlaufstoß verringert. Durch die nasenförmigen Kontaktflächen 4 wird außerdem auch ein Durchschwingen der Kette beim Auslaufen aus dem Kettenrad 2 reduziert.

Durch die Beschichtung bzw. Fertigung der nasenförmigen Kontaktflächen 4 aus einem elastischen Material wird der übertragene Kontaktimpuls auf das nachfolgende Kettenglied stark gedämpft.

Eine weitere Maßnahme zur Reduzierung der Geräuschentwicklung der Kette ist darin zu sehen, dass die Längsseite der mit der Auflageschulter des Kettenrades 2 in Kontakt stehenden Kettenlasche 1 mit einer schwingungsdämpfenden Materialschicht 3 versehen wird. Dabei kann die dämpfende Materialschicht 3 aus Metallschaum, Elastomeren, Gummi oder dergleichen bestehen, mit der die Längsseite der Kettenlasche 1 beschichtet wird. Zur weiteren Reduzierung des Kontaktimpulses zwischen Kettenlasche 1 und der Auflageschulter des Kettenrades 2 ist die mit der Auflageschulter in Kontakt stehende Längsseite der Kettenlasche 1 an die Außenkontur der Auflageschulter des mit dem kleinsten im Kettentrieb befindlichen Kettenrades 2 oder an die kleinste Krümmung einer Spann- oder Führungsschiene angepasst. Durch die Anordnung der schwingungsdämpfenden Materialschicht 3 an der Kettenlasche 1 und die Anpassung der Längsseite der Kettenlasche 1 an die Kontur der Auflageschulter des kleinsten Kettenrades 2 wird ein großflächiger Kontakt zwischen Kettenglied und Kettenrad erreicht und somit der Kontaktimpuls und damit die Geräuschentwicklung der Kette reduziert. Bei Einsatz von Spann- und Führungsschienen ist es auch möglich, die Längsseite der mit einer Spann- oder Führungsschiene in Kontakt stehenden Kettenlasche 1 mit einer schwingungsdämpfenden Materialschicht zu versehen.

### Aufstellung der verwendeten Bezugszeichen

- 1: Kettenlasche
- 2: Kettenrad
- 3: Materialschicht
- 4: Kontaktflächen
- 5: Kettenlasche

## Patentansprüche

1. Kette für einen Kettentrieb bestehend aus einer Vielzahl von durch Kettenbolzen miteinander verbundenen Kettenlaschen (1), an deren Stirnseiten im unteren Bereich der Kettenkrümmung nasenförmige Kontaktflächen (4) angeordnet sind, wobei die nasenförmigen Kontaktflächen (4) der Kettenlasche (1) mit einer schwingungsdämpfenden Materialschicht versehen sind und derart ausgebildet sind, dass sich die nasenförmigen Kontaktflächen (4) der Kettenlasche (1) mit den nasenförmigen Kontaktflächen (4) der jeweilig vorherigen und nachfolgenden Kettenlasche (5) beim Einlauf der Kette auf das kleinste Kettenrad (2) oder an die kleinste Krümmung einer Spann- oder Führungsschiene berühren.

2. Kettentrieb nach Anspruch 1,
**dadurch gekennzeichnet, dass**
die Beschichtung der nasenförmigen Kontaktflächen (4) aus Metallschaum, Elastomeren oder Gummi besteht.

## Claims

1. Chain for a chain drive consisting of a large number of chain bolt linked chain lugs (1), with nose-shaped contact surfaces (4) on its front side in the lower region of the chain curvature, whereby the nose-shaped contact surfaces (4) of the chain lugs (1) are coated with a layer consisting of vibration damping material and designed so that the nose-shaped contact surfaces (4) of the chain lug (1) with the nose-shaped contact surfaces (4) of the respective prior and subsequent chain lugs (5) are getting in contact when the chain is running on the smallest chain wheel (2 ) or the smallest curvature of a tensioner rail or a guide rail.

2. Chain according to claim 1,
**characterized in that,**
the coating of the nose-shaped contact surfaces (4) is made of metal foam, elastomer or rubber.

## Revendications

1. Une chaîne pour un mécanisme d'entraînement á chaine constitué d'une multitude de axes de maillon quelles joindre des chaîne de languettes (1), les chaîne de languettes (1) sont muni avec surfaces de contact (4) en forme d'un nez au front de le chaîne de languettes (1) a la bas de la chaîne de courbure, les forme d'un nez surfaces de contact (4) sont enduite avec une refrénat la vibration couche et sont aussi formés que les forme d'un nez surfaces de contact (4) de la chaîne de languette (1) toucher avec les forme d'un nez surfaces de contact (4) de la précédente et de suivre respectivement les chaînes de languette (5) lors du rodage de la chaîne sur le pignon plus petit (2 ) ou à la plus petite courbure de rail de tensionnement ou de rail de guidage.

2. Chaîne motrices selon la revendication 1,
**caractérisé en ce que,**
le revêtement de les forme d'un nez des surfaces de contact (4) sont en métal mousse, élastomère ou en élastique.
